# EUROPEAN PATENT SPECIFICATION

(11) **EP 4 658 505 B1**
(45) Date of publication and mention of the grant of the patent: **18.11.2026**
(21) Application number: 23708321.7
(22) Date of filing: 31.01.2023
(51) Int. Cl.: B32B 38/18, A01N 25/34, B32B 3/12

(54) **PASSENGER VEHICLE COMPONENTS WITH PERFORATED FILM CONSTRUCTION**
FAHRGASTFAHRZEUGKOMPONENTEN MIT LOCHFOLIENKONSTRUKTION
ÉLÉMENTS DE VÉHICULE DE TOURISME À CONSTRUCTION À FILM PERFORÉ

(43) Date of publication of application: 10.12.2025
(73) Proprietor: Safran Cabin Inc., Huntington Beach, CA 92647 (US)
(72) Inventor: DEL PINTO, James, Huntington Beach, California 92647 (US)
(74) Representative: Casalonga
(86) International application number: PCT/US2023/012025
(87) International publication number: WO 2024/162959

(56) References cited:
- CN-A- 108 274 839
- CN-A- 111 331 940

## Description

### FIELD OF THE INVENTION

The field of the invention relates to health features for the interior of passenger vehicles such as aircrafts.

### BACKGROUND

Passenger health can be an important consideration in carrier industries, particularly with air carriers. Most interiors in commercial passenger aircraft include features such as a composite structure that line the interior of the aircraft so as to provide structure and aesthetically pleasing features. Generally, the composite structure provides for a presentation surface which faces the interior of the aircraft. As a result, there exists a large passenger-facing surface which may contact passengers or breathing air in use and which thus may be relevant in considerations of efforts for reducing transmission of microbes.

CN 111 331 940 A discloses an anti-radiation artificial leather comprising a base layer, insulation layer, reinforcement layer, antibacterial layer and radiation protection layer. The radiation protection layer is made of a silver fiber layer; the antibacterial layer comprises a honeycomb multi-layer carbon fiber layer with nano silver antibacterial agent and antibacterial peptide; and the layers are perforated, filled with natural latex, and bonded by resin glue.

CN 108 274 839 A discloses a lightweight and high-strength honeycomb composite panel comprising a honeycomb layer, honeycomb support grooves, support columns, connecting rods, support rods, an antibacterial layer, and a bottom anti-wear layer.

### SUMMARY

Some embodiments of the present technology relate to a method for manufacturing a microbe-resistant structure, the method including: providing a structural core; providing a binding compound; providing an anti-microbial film having a first surface and a second surface on opposite sides of the film, wherein the first surface includes a surface treatment that limits a transmission of microbes, and wherein the second surface includes a plurality of perforations; forming a charge that includes the structural core, the binding compound, and the film arranged such that the second surface of the film is facing toward the structural core and the first surface is facing away from the structural core; and applying heat and pressure to the charge such that the binding compound flows to substantially fill the plurality of perforations.

Some embodiments of the present technology, not encompassed by the wording of the claims, may include a microbe-resistant structure including: a structural core; an anti-microbial film having a first surface and a second surface on opposite sides of the film, wherein the first surface includes a surface treatment that limits a transmission of microbes, wherein the second surface includes a plurality of perforations, wherein the film is arranged such that the second surface of the film is facing toward the structural core and the first surface is facing away from the structural core; and a binding compound substantially filling the plurality of perforations and securing the film to the structural core such that the surface treatment is facing away from the structural core.

Some embodiments of the present technology, not encompassed by the wording of the claims, may include a microbe-resistant structure including: a structural core; an anti-microbial fluoropolymer film having a first surface and a second surface on opposite sides of the film, wherein the first surface includes a texture that limits a transmission of microbes, wherein the second surface includes a plurality of perforations, wherein the film is arranged such that the second surface of the film is facing toward the structural core and the first surface is facing away from the structural core; and a binding compound substantially filling the plurality of perforations and securing the film to the structural core such that the texture is facing away from the structural core.

### BRIEF DESCRIPTION OF THE DRAWINGS

FIG. 1 is an exploded view of a microbe-resistant structure, according to various embodiments.
FIG. 2 is a flow chart of a method of manufacturing a microbe-resistant structure, according to certain embodiments of the present invention.
FIG. 3 is a close-up view of a first surface of an anti-microbial film of the microbe-resistant structure of FIG. 1.
FIG. 4 is a close-up view of a second surface of the anti-microbial film of the microbe-resistant structure of FIG. 1.
FIG. 5 is a perspective view of a spiked roller that may be used in the method of FIG. 2, according to certain embodiments of the present invention.
FIG. 6 is a perspective view of a charge of the microbe-resistant structure of FIG. 1 positioned within a mold.
FIG. 7 is a perspective view of the microbe-resistant structure of FIG. 1.
FIG. 8 is a side cross-sectional view of the microbe-resistant structure of FIG. 1.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Embodiments herein may provide for a microbe-resistant structure for use within the interior of an aircraft. While the microbe-resistant structures are discussed for use in relation to the interior of an aircraft, they are by no means so limited. Rather, embodiments of the microbe-resistant structures may be used in interiors of other vehicles or structures of any type or otherwise as desired. For example, embodiments may be used in trains, buses, personal vehicles, commercial or residential buildings, or any other instance when a microbe-resistant structure may be useful.

In various embodiments, the microbe-resistant structure can correspond to a composite component that can be used to line the interior or cabin of an aircraft. The microbe-resistant structure may provide an interior surface, otherwise known as a presentation surface. The microbe-resistant structure may be constructed such that the presentation surface limits the transmission of microbes (viruses, bacteria, etc.) or otherwise resists any microbes that contact the microbe-resistant structure. The microbe-resistant structure may include a surface treatment that may function to limit the transmission of microbes. For example, the microbe-resistant structure may include surface topography that may break apart microbes on contact and/or may include suitable material composition for neutralizing and/or otherwise counteracting microbe viability. In various examples, the microbe-resistant structure includes an anti-microbial film, e.g., which may include at least some of the features to supply the function of the microbe-resistant structure.

The interior, or cabin, of an aircraft may hold a large number of people in a close proximity to one another, which may lead to an increased chance of transmission of microbes such as bacteria and viruses. In view of this consideration, the microbe-resistant structure may be used to construct at least a portion of the interior of the aircraft. As a result, the presentation surface or other surface facing the interior of the aircraft may limit the transmission of any microbes that may come in contact with the microbe-resistant structure, which may in turn reduce chances of passengers within the cabin coming in contact with microbes.

Microbe-resistance films may be typically designed to be applied to structures or surfaces using adhesives or "peel-and-stick" methods. Such methods may risk damaging or destroying the microbe-resistance films, which may reduce or eliminate the microbe-resistant properties of the film. This risk is especially elevated in the application of the films onto contoured surfaces. Therefore, there may be value in developing and implementing techniques for efficiently and reliably applying an anti-microbial film to a variety of structures without damaging the microbe-resistant films.

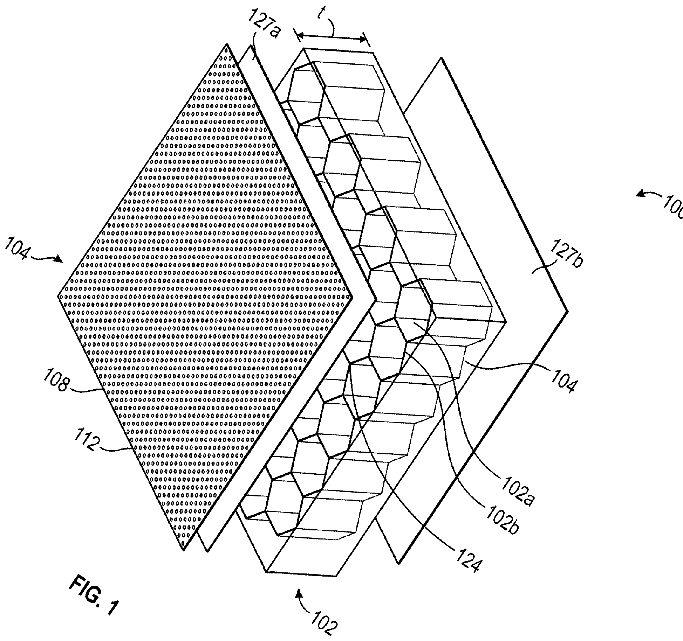

Referring now to the figures, a microbe-resistant structure 100, according to certain embodiments, is shown in an exploded view in FIG. 1. The microbe-resistant structure 100 may include a structural core 102, a binding compound 104, and an anti-microbial film 106, although more, fewer, and/or different elements may be included. The anti-microbial film 106 may be secured to the structural core 102 using the binding compound 104 in order to create a composite structure having an anti-microbial surface. Such a coupling method may maintain the integrity of the anti-microbial film 106 while providing for a method of securing the film 106 to a variety of contoured surfaces.

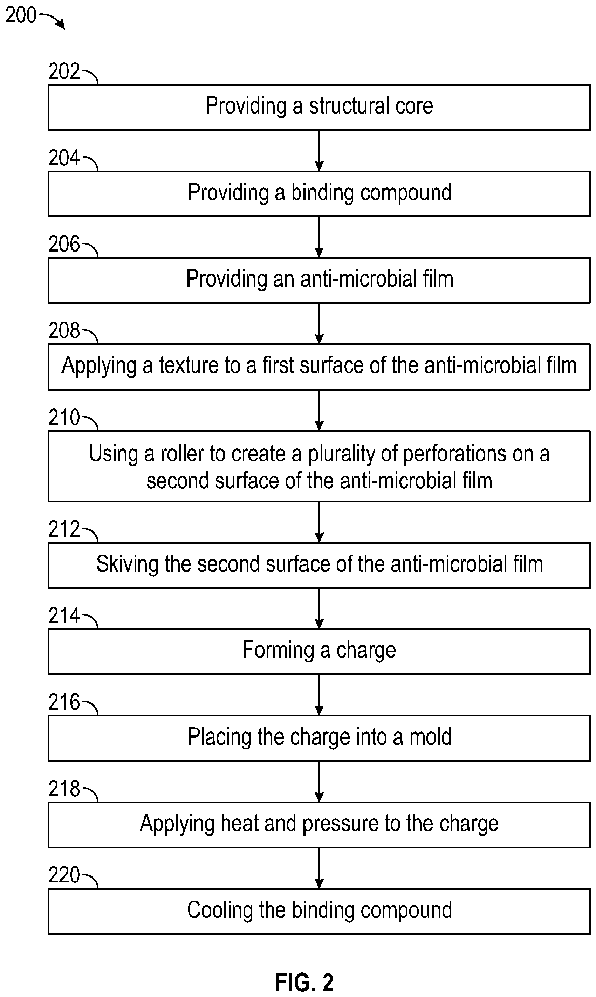

An example of a method for manufacturing an embodiment of the microbe-resistant structure 100 is depicted in FIG. 2.

The method 200 at 202 can include providing a structural core 102. The structural core 102 may provide a main structural component of the microbe-resistant structure 100. The structural core 102 can be positioned centrally within the microbe-resistant structure 100. Referring to the exploded view of FIG. 1, the structural core 102 may include an internal surface 124. The internal surface 124 may be configured to face the inside of the interior of a vehicle. The structural core 102 may further include an external surface 126, e.g., on the opposite side of the structural core 102 from the internal surface 124.

In some embodiments, the structural core 102 may include an open-celled structure, such as a honeycomb or lattice structure. Such structure may reduce the overall weight of the microbe-resistant structure 100 while maintaining the structural integrity of the microbe-resistant structure 100, for example. As shown in FIG. 1, the structural core 102 is depicted as a honey-comb structure having a plurality of cells 102a and cell walls 102b. In some examples, each of the cells 102a may have a size between 1.59 millimeters and 6.35 millimeters (between 1/16 of an inch and 1/4 of an inch) and/or each of the walls 102b may have a thickness t (e.g., which may be aligned along a same direction as a thickness of the structural core 102) between 0.127 millimeter and 0.635 millimeter (between 0.005 inches and 0.025 inches), although other relative dimensions may be utilized. As depicted, the cells 102a are shown to have a uniform cell size and to be arranged in a repeating pattern, however, this is merely exemplary, and a variety of differing cell sizes and arrangements may be utilized without departing from the scope of this disclosure. The reduction of weight may be particularly beneficial in applications where the microbe-resistant structure 100 is being used in a vehicle such as an aircraft.

In some embodiments, the structural core 102 and, subsequently, the inner surface 124 and external surface 126 may take a variety of shapes including flat, contoured, and or other shapes that may be present within an interior of a vehicle. The structural core 102 may be made of a variety of materials including, but not limited to, paper, kevlar, resin, or rigid foam. The method 200 at 204 may include providing a binding compound 104. The binding compound 104 may be provided in a liquid, gel, or other injectable, extrudable, or brushable form, or may be supplied by inclusion in a pre-impregnated state in the structural core 102 and/or accompanying other layers. The binding compound 104 may be configured to surround and/or extend through the structural core 102 in use. When dried and/or cured, the binding compound 104 may partially or wholly encapsulate portions or an entirety of the structural core 102 to create a composite material from the structural core 102 alone and/or in combination with any other layers that may be included with the structural core 102. In some embodiments, the binding compound 104 is heated prior to being provided to the structural core 102, e.g., which may reduce the viscosity of the binding compound 104 and/or otherwise allow the binding compound 104 to flow around and/or through the structural core 102 and/or other layers. Once cooled and/or cured, the binding compound 104 may add strength and/or flexibility to the microbe-resistant structure 100, which may occur while minimizing the overall weight of the microbe-resistant structure 100, for example. The binding compound 104 may be made of any individual or combination of a variety of materials typically associated with composites including, but not limited to vinylester resin, polyester resin, or epoxy resin.

The method 200 at 206 may include providing an anti-microbial film 106. The anti-microbial film 106 may be positioned towards the interior of a vehicle, such as an aircraft. The film 106 may be configured to reduce the rate of transmission of any microbes that contact the film 106. In particular, the anti-microbial film 106 may include an interior facing first surface 108 and an exterior facing second surface 110 positioned opposite the first surface. The anti-microbial film 106 may be made of a variety of materials, for example, materials having good heat-resistance, chemical-resistance, and/or weathering properties. Non-limiting examples may include materials such as Tedlar (polyvinyl fluoride) or polyvinylidene (PVDF).

In use, the first surface 108 may correspond to the presentation surface in the completed component. Accordingly, the anti-microbial film 106 may face the interior of a vehicle. Such positioning may cause the interior of the vehicle to be faced by a surface treatment 112 that limits the transmission of microbes.

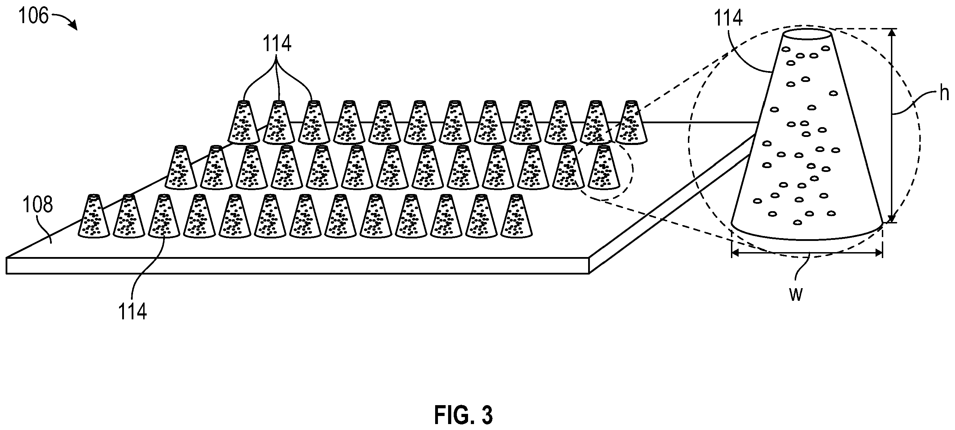

A close-up view of an example of the first surface 108 of the anti-microbial film 106 is shown in FIG. 3. A variety of techniques, such as material choice and/or textures, may be used to treat the first surface 108 of the anti-microbial film 106. For example, the film 106 may incorporate nanostructure aluminum (Al), silver nanoparticles (AgNPs), copper-silver nanohybrids (Cu-Ag), and/or other material that is microbe-destroying or microbe-resistant. Such materials may be incorporated into the anti-microbial film 106 using a variety of methods. Non-limiting examples may include incorporating antimicrobial agents directly into the processing of plastic polymers, coating or immobilizing antimicrobial materials onto polymer surfaces, and/or using polymers that are inherently antimicrobial.

The method 200 at 208 may include applying a texture to the first surface 108 of the anti-microbial film 106. In addition to or in lieu of the use of anti-microbial materials, the film 106 may be textured so as to increase the effective contact area between microbes and the anti-microbial film 106 and/or so as to create a surface harsh enough to damage the cell walls of microbes contacting the film 106. The texturing may be used in conjunction with or instead of the materials described above as a way to increase the anti-microbial properties of the film 106. The film 106 may be obtained with a texture already included. Alternatively, the film 106 may be obtained without the texture already included. There are a variety of techniques for texturing surfaces, including, but limited to: lithographic techniques, direct writing techniques, knurling, and instability-induced polymeric patterning. As may be best seen by way of example in FIG. 3, the resulting texture may include a plurality of structures 114. The plurality of structures 114 may be conical shaped and/or arranged in a uniform repeating pattern across the first surface 108 of the anti-microbial film 106. The plurality of structures 114 may each have a height *h* between 250 nanometers (nm) and 1250 nm and a width *w* between 50 nm and 500 nm. The size and shape of the plurality of structures 114 shown is merely an example, and varying sizes and/or shapes may be utilized without departing from the scope of this disclosure. Similarly, the plurality of structures 114 is shown in a uniform repeating pattern, however, in some applications, it may be beneficial to have variance within the pattern of the plurality of structures 114.

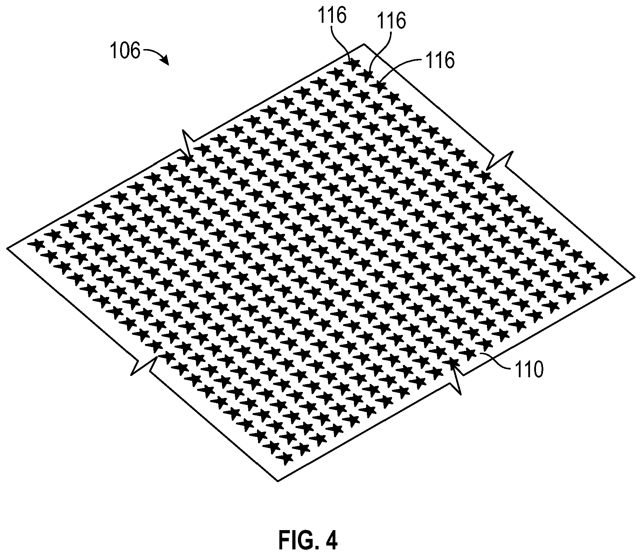

FIG. 4 depicts a close-up view of an example of the second surface 110 of anti-microbial film 106. In order to couple the anti-microbial film 106 to the structural core 102, the second surface 110 of the anti-microbial film 106 may include a plurality of perforations 116 which may receive and/or be filled with the binding compound 104 during fabrication. The perforations 116 may additionally or alternatively increase the flexibility of the anti-microbial film 106, e.g., which may allow for the film 106 to be more thoroughly secured to features that may be present on the structure 100, such as doors or windows. As may be best seen in FIG. 4 by way of example, the perforations 116 may be uniformly positioned across the second surface 110. The perforations 116 may be dimensioned to be less than 0.127 millimeter ( 0.05 inches) in diameter and/or may be sufficiently small to be non-visible to an unassisted human eye. In some embodiments, the presence of the perforations 116 in a final completed product may be detectible by exposing the microbe-resistant structure to a black light, ultraviolet lamp, or other form of specialized light source and observing a responsive array of pin-prick aspects that may correspond to the binding compound 104 and/or structural core 102 reflecting back through the perforations 116 of the anti-microbial film 106 (e.g., while the anti-microbial film 106 may otherwise absorb instead of reflect the specialized light). The perforations 116 may be positioned in a uniform, symmetric, asymmetric, or random pattern based on the application and use case of the anti-microbial film 106 or, more broadly, the microbe-resistant structure 100. The perforations 116 may take a variety of shapes, including, but not limited to: circular, star-shaped, rectangular, etc. In FIG. 4, the perforations 116 are shown as star-shaped. The star-shape may provide additional surface area compared to circular perforations along the edge of the perforations 116. The additional surface area of the perforations may allow for the binding compound to contact a greater amount of the anti-microbial film 106. Although star-shaped perforations are described and shown herein, other shapes may be utilized without departing from the scope of the disclosure.

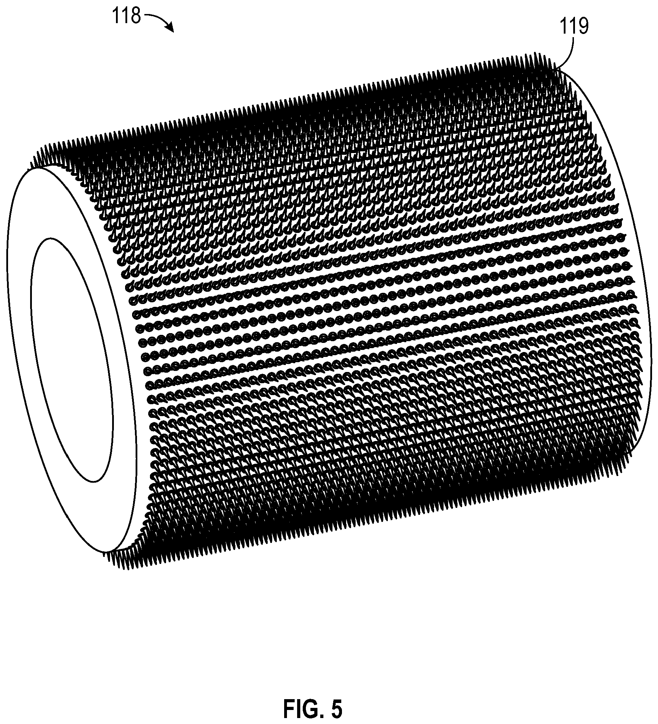

In order to create the plurality of perforations 116, the method 200 (e.g., FIG. 2) at 210 may include moving a spiked roller 118 (e.g., an example of which may be seen in FIG. 5). The roller 118 may be moved across the second surface 110 (e.g., FIG. 4) so as to puncture or penetrate the anti-microbial film 106. The spiked roller 118 (e.g., FIG. 5) may include a plurality of spikes 119 positioned in a uniform arrangement along the surface of the roller 118. Such placement may allow the roller to roll across the second surface 110 (e.g., FIG. 4) of the anti-microbial film 106 and efficiently create an array of perforations 116.

Referring again to FIG. 2, the method 200 at 212 may include skiving the anti-microbial film 106. Skiving can include cutting a portion of the second surface 110 of the anti-microbial film 106. Such cutting may provide for additional surface area for the binding compound to fill and couple the anti-microbial film 106 to the structural core. In some embodiments, skiving may be included so as to provide additional likelihood that the binding compound 104 sufficiently secures the anti-microbial film 106 to the structural core 102.

The method 200 at 214 may include forming a charge 120. The charge can include the structural core 102, the binding compound 104, and the anti-microbial film 106. The charge 120 may be arranged such that the second surface 110 of the anti-microbial film 106 is facing toward the structural core 102 and the first surface 108 is facing away from the structural core 102.

In some embodiments, the charge 120 may include a variety of other components or layers. As one example, an additional layer may be positioned between the anti-microbial film 106 and the structural core 102. As another example, a layer additionally or alternatively may be positioned at the external surface 126 of the structural core 102. The components may provide additional structural integrity, safety features, and/or other functions. Some examples of materials of additional layers may include fire-resistant materials, Kevlar, or other materials known in the art. Referring to FIG. 1, the positioning of potential additional layers is represented by a pair of sample blocks 127a, 127b. The sample blocks 127a, 127b are positioned on either side of the structural core 102 and represent a possible position for potential additional layers. Each sample block 127a, 127b acts as a placeholder for any potential additional layers and, therefore, may represent a singular additional layer, a plurality of additional layers, or no additional layers.

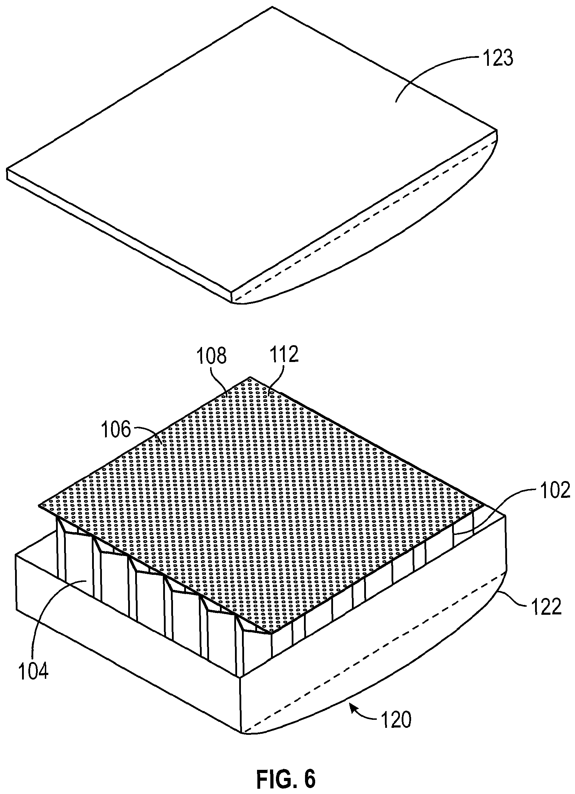

The method 200 at 216 may include positioning the charge 120 in a mold 122. In some embodiments, it is desirable for the microbe-resistant structure 100 to be contoured, for example, for use as interior cabin walls of an aircraft. As shown in FIG. 6, the charge 120 may be positioned within a mold 122 corresponding with a desired final shape of the microbe-resistant structure 100. Once heat and pressure is applied to the charge 120, the structural core 102, the binding compound 104, and the anti-microbial film 106 may take the shape of the mold 122. Similarly, to what is described below with regards to act 218, as heat is applied to the charge 102, the binding compound 104 may flow into the perforations 116 of the second surface 110 of the anti-microbial film 106 and, once dried and/or cured, may secure the anti-microbial film 106 to the newly shaped structural core 102. In some embodiments, an additional plate 123 is positioned above the mold 122 and may be used to apply further pressure to the charge 120. Additionally, as depicted in FIG. 6 using dashed lines, the mold 122 and the plate 123 may have a flat profile and/or take a variety of shapes corresponding with a variety of embodiments of the microbe-resistant structure 100 described herein. Further, the plate 123 may be additionally textured as to protect and/or enhance any texture that may be present on the anti-microbial film 106 as the plate 123 applies pressure to the charge 120.

In order to couple the anti-microbial film 106 to the structural core 102, the method 200 at 218 may include applying heat and/or pressure to the charge 120. Once the charge 120 is heated, the binding compound 104 may flow so as to substantially fill the plurality of perforations 116 of the second surface 110 of the anti-microbial film 106. As discussed previously, by heating the charge 120, the viscosity of the binding compound 104 may be lowered. By lowering the viscosity, the binding compound may enter into or flow into the perforations 116 of the second surface 110 of the anti-microbial film 106. In some embodiments, pressure may be applied to the charge 120 so as to compress the components together and to ensure that the binding compound 104 sufficiently fills any gaps or spaces that may exist within the structural core 102 and/or the anti-microbial film 106. In particular, the application of pressure may force the binding compound 104 into the perforations 116. Further, in some embodiments, the anti-microbial film 106 may be additionally subjected to a vacuum forming process for enhancing engagement with the structural core 102, e.g., to further contour the film 106 to the intended shape of the structure. The vacuuming process may additionally encourage the binding compound 104 to flow into the perforations 116 of the film 106, e.g., further securing the film 106.

Additionally, the application of heat and pressure may allow for the charge 120 to be bent or to adopt the shape of the mold 122. In particular, the heat and pressure may allow at least the structural core 102 and the anti-microbial film 106 to be become more pliable. The pliable components may then be pressed into the mold 122, shaping the components into a shape corresponding to the mold 122. In some embodiments, various components of the charge 120 may be pre-shaped. For example, the structural core 102 may be the desired shape prior to being incorporated into the charge 120. Pre-shaped components may be combined with components that are intended to be shaped through the molding process to reduce manufacturing costs, increase ease of manufacturing, or accommodate varying applications. In some embodiments, a variety of other molding techniques known in the art may be used, i.e. pressure molding, vacuum forming, or platening. For example, the charge 120 may be positioned between two plates which may then apply heat and/or pressure to the charge 120 to flatten and/or otherwise contour the charge 120 and combine the components therein.

The method 200 at 220 may include cooling and/or curing the binding compound 104. As the binding compound 104 begins to cool and/or cure, either passively or actively, the binding compound 104 may begin to harden, securing the structural core 102 and the anti-microbial film 106 together. By filling the plurality of perforations 116 with the binding compound 104, the anti-microbial film 106 may be secured to the structural core 102 in an arrangement in which the surface treatment of the first surface 108 of the anti-microbial film 106 is preserved and maintained facing away from the structural core 102. Additionally, such a process may maintain the integrity of the surface treatment 112 and/or ensure the anti-microbial qualities of the film 106. Cooling and/or curing the binding compound 104 may be accomplished passively such as air-drying or actively using fans or cooling devices depending on the application.

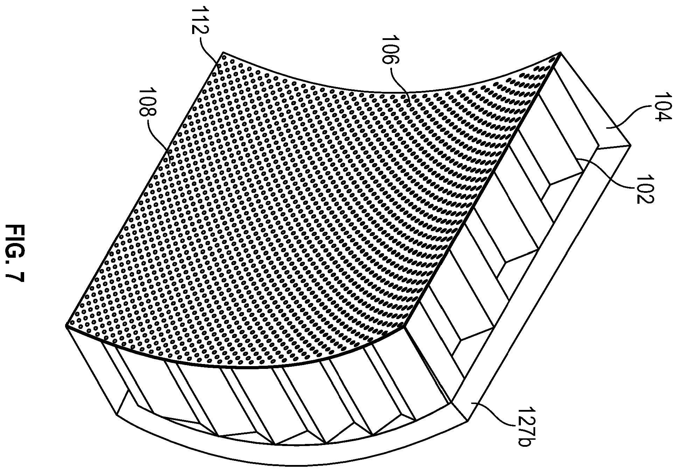

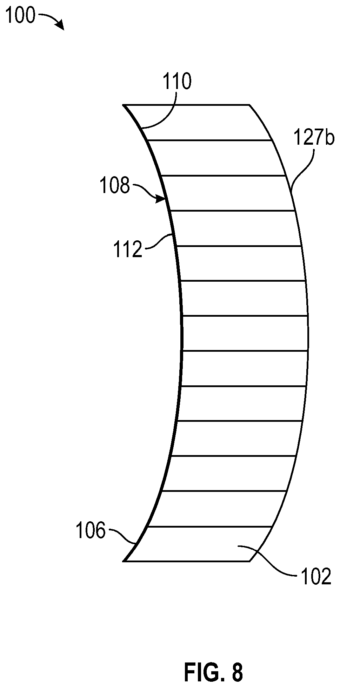

An example of the resulting microbe-resistant structure 100 of the method 200 is shown in FIGS. 7 and 8. FIG. 7 depicts a perspective view of the microbe-resistant structure 100, and FIG. 8 depicts a cross-sectional view of the microbe-resistant structure 100. As shown, the microbe-resistant structure 100 includes a central structural core 102 embedded in a binding compound 104. Additionally, the anti-microbial film 106 may be positioned at, and secured to, the central structural core 102, such that the first surface 108 or presentation surface is facing away from the structural core 102. As noted, the resulting microbe-resistant structure 100 may be used in a variety of applications. For example, embodiments described herein may be used in trains, buses, personal vehicles, commercial or residential buildings, or any other instance when a microbe-resistant structure may be useful. Additionally, dimensions of the microbe-resistant structure 100 may vary depending on the desired implementation of the structure 100. For example, in commercial vehicles, the thickness of the structure may vary between 3.175 millimeters and 19.05 millimeters (0.125" and 0.75"), however, this is merely exemplary and is not intended to be limiting as further dimensions are envisioned within the scope of this disclosure.

Different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

## Claims

1. A method for manufacturing a microbe-resistant structure (100), the method comprising :
- providing a structural core (102);
- providing a binding compound (104);
- providing an anti-microbial film (106) having a first surface (108) and a second surface (110) on opposite sides of the film, wherein the first surface includes a surface treatment (112) that limits a transmission of microbes, and wherein the second surface includes a plurality of perforations (116);
- forming a charge (120) that includes the structural core (102), the binding compound (104), and the film (106) arranged such that the second surface (110) of the film (106) is facing toward the structural core (102) and the first surface (108) is facing away from the structural core (102); and
- applying heat and pressure to the charge (120) such that the binding compound (104) flows to substantially fill the plurality of perforations (116).

2. The method of claim 1, further comprising cooling the binding compound (104) to secure the film (106) to the structural core (102) in an arrangement in which the surface treatment (112) of the first surface (108) is preserved and maintained facing away from the structural core (102).

3. The method of claim 1, further comprising using a roller (118) to create the plurality of perforations (116) on the second surface (110) of the film (106).

4. The method of claim 3, wherein each perforation in the plurality of perforations (116) is less than 1.27 millimetres (0.05 inches) in diameter or sufficiently small to be non-visible to an unassisted human eye.

5. The method of claim 4, wherein at least a portion of the plurality of perforations (116) are star-shaped.

6. The method of claim 1, further comprising applying a texture to the first surface (108).

7. The method of claim 6, the texture of the first surface (108) further includes a plurality of structures with a height between 250 nm and 1250 nm and a width between 50 nm and 500 nm.

8. The method of claim 1, wherein the structural core (102) includes an internal surface (124) and an external surface (126) opposing the internal surface, wherein the internal surface is configured to face an interior of a vehicle.

9. The method of claim 1, wherein the film (106) includes Tedlar (PVF) or polyvinylidene (PVDF).

10. The method of claim 1, further comprising skiving the second surface (110) of the anti-microbial film (106).

11. The method of claim 1, further comprising positioning the charge (120) in a mold (122) prior to applying heat and pressure.

12. The method of claim 11, wherein the microbe-resistant structure (100) is curved.

13. The method of claim 1, wherein the binding compound (104) is a vinylester resin, polyester resin, or epoxy resin.

## Patentansprüche

1. Verfahren zum Herstellen einer mikrobenresistenten Struktur (100), wobei das Verfahren umfasst:
- Bereitstellen eines Strukturkerns (102);
- Bereitstellen eines Bindemittels (104);
- Bereitstellen einer antimikrobiellen Folie (106) mit einer ersten Oberfläche (108) und einer zweiten Oberfläche (110) auf gegenüberliegenden Seiten der Folie, wobei die erste Oberfläche eine Oberflächenbehandlung (112) einschließt, die eine Übertragung von Mikroben begrenzt, und wobei die zweite Oberfläche eine Vielzahl von Perforationen (116) einschließt;
- Bilden einer Füllung (120), die den Strukturkern (102), das Bindemittel (104) und die Folie (106) einschließt, die so angeordnet sind, dass die zweite Oberfläche (110) der Folie (106) dem Strukturkern (102) zugewandt ist und die erste Oberfläche (108) von dem Strukturkern (102) abgewandt ist; und
- Anwenden von Wärme und Druck auf die Füllung (120), so dass das Bindemittel (104) fließt, um die Vielzahl von Perforationen (116) im Wesentlichen zu füllen.

2. Verfahren nach Anspruch 1, ferner umfassend das Kühlen des Bindemittels (104), um die Folie (106) an dem Strukturkern (102) in einer Anordnung zu befestigen, in der die Oberflächenbehandlung (112) der ersten Oberfläche (108) erhalten und von dem Strukturkern (102) abgewandt bleibt.

3. Verfahren nach Anspruch 1, ferner umfassend die Verwendung einer Rolle (118) zum Erzeugen der Vielzahl von Perforationen (116) auf der zweiten Oberfläche (110) der Folie (106).

4. Verfahren nach Anspruch 3, wobei jede Perforation in der Vielzahl von Perforationen (116) weniger als 1,27 Millimeter (0,05 Zoll) im Durchmesser beträgt oder so klein ist, dass sie für das bloße menschliche Auge nicht sichtbar ist.

5. Verfahren nach Anspruch 4, wobei mindestens ein Teil der Vielzahl von Perforationen (116) sternförmig sind.

6. Verfahren nach Anspruch 1, ferner umfassend das Aufbringen einer Textur auf die erste Oberfläche (108).

7. Verfahren nach Anspruch 6, wobei die Textur der ersten Oberfläche (108) ferner eine Vielzahl von Strukturen mit einer Höhe zwischen 250 nm und 1250 nm und einer Breite zwischen 50 nm und 500 nm einschließt.

8. Verfahren nach Anspruch 1, wobei der Strukturkern (102) eine Innenfläche (124) und eine der Innenfläche gegenüberliegende Außenfläche (126) einschließt, wobei die Innenfläche so eingerichtet ist, dass sie einem Innenraum eines Fahrzeugs zugewandt ist.

9. Verfahren nach Anspruch 1, wobei die Folie (106) Tedlar (PVF) oder Polyvinyliden (PVDF) einschließt.

10. Verfahren nach Anspruch 1, ferner umfassend das Abschaben der zweiten Oberfläche (110) der antimikrobiellen Folie (106).

11. Verfahren nach Anspruch 1, ferner umfassend das Positionieren der Füllung (120) in einer Form (122) vor dem Anwenden von Wärme und Druck.

12. Verfahren nach Anspruch 11, wobei die mikrobenresistente Struktur (100) gekrümmt ist.

13. Verfahren nach Anspruch 1, wobei das Bindemittel (104) ein Vinylesterharz, Polyesterharz oder Epoxidharz ist.

## Revendications

1. Procédé de fabrication d'une structure résistante aux microbes (100), le procédé comprenant :
- la fourniture d'un noyau structural (102) ;
- la fourniture d'un composé de liaison (104) ;
- la fourniture d'un film antimicrobien (106) présentant une première surface (108) et une seconde surface (110) sur des côtés opposés du film, dans lequel la première surface inclut un traitement de surface (112) qui limite une transmission de microbes, et dans lequel la seconde surface inclut une pluralité de perforations (116) ;
- la formation d'une charge (120) qui inclut le noyau structural (102), le composé de liaison (104) et le film (106) agencés de sorte que la seconde surface (110) du film (106) soit orientée vers le noyau structural (102) et la première surface (108) soit orientée à l'opposé du noyau structural (102) ; et
- l'application de chaleur et de pression sur la charge (120) de sorte que le composé de liaison (104) s'écoule pour remplir sensiblement la pluralité de perforations (116).

2. Procédé selon la revendication 1, comprenant en outre le refroidissement du composé de liaison (104) pour fixer le film (106) au noyau structural (102) dans un agencement dans lequel le traitement de surface (112) de la première surface (108) est conservé et maintenu orienté à l'opposé du noyau structural (102).

3. Procédé selon la revendication 1, comprenant en outre l'utilisation d'un rouleau (118) pour créer la pluralité de perforations (116) sur la seconde surface (110) du film (106).

4. Procédé selon la revendication 3, dans lequel chaque perforation dans la pluralité de perforations (116) est inférieure à 1,27 millimètre (0,05 pouce) de diamètre ou suffisamment petite pour être invisible à l'œil nu.

5. Procédé selon la revendication 4, dans lequel au moins une partie de la pluralité de perforations (116) est en forme d'étoile.

6. Procédé selon la revendication 1, comprenant en outre l'application d'une texture sur la première surface (108).

7. Le procédé selon la revendication 6, la texture de la première surface (108) incluant en outre une pluralité de structures d'une hauteur comprise entre 250 nm et 1 250 nm et d'une largeur comprise entre 50 nm et 500 nm.

8. Procédé selon la revendication 1, dans lequel le noyau structural (102) inclut une surface interne (124) et une surface externe (126) opposée à la surface interne, dans lequel la surface interne est configurée pour faire face à un intérieur d'un véhicule.

9. Procédé selon la revendication 1, dans lequel le film (106) inclut du Tedlar (PVF) ou du polyvinylidène (PVDF).

10. Procédé selon la revendication 1, comprenant en outre le décapage de la seconde surface (110) du film antimicrobien (106).

11. Procédé selon la revendication 1, comprenant en outre le positionnement de la charge (120) dans un moule (122) avant l'application de chaleur et de pression.

12. Procédé selon la revendication 11, dans lequel la structure résistante aux microbes (100) est incurvée.

13. Procédé selon la revendication 1, dans lequel le composé de liaison (104) est une résine vinylester, une résine polyester ou une résine époxy.
